# EUROPÄISCHE PATENTSCHRIFT

(11) **EP 3 066 711 B1**
(45) Veröffentlichungstag und Bekanntmachung des Hinweises auf die Patenterteilung: **02.08.2017**
(21) Anmeldenummer: 14799958.5
(22) Anmeldetag: 29.10.2014
(51) Int. Cl.: B64D 41/00, H01M 16/00, H01M 8/06, H01M 8/04007, H01M 8/04082

(54) **LUFTFAHRZEUG MIT EINER BRENNSTOFFZELLENEINRICHTUNG**
AIRCRAFT WITH A FUEL CELL DEVICE
AVION AVEC UNE CONFIGURATION DE PILE A COMBUSTIBLE

(30) Priorität: 07.11.2013 DE 102013112248
(43) Veröffentlichungstag der Anmeldung: 14.09.2016
(73) Patentinhaber: Airbus Defence and Space GmbH, 85521 Ottobrunn (DE)
(72) Erfinder: SCHRAMM, Gerrit, 25436 Uetersen (DE); LANGERMANN, Renè, 21423 Winsen (Luhe) (DE); TROTT, Richard, 85399 Hallbergmoos (DE); SCHIRRMANN, Arnd, 20255 Hamburg (DE)
(74) Vertreter: Isarpatent
(86) Internationale Anmeldenummer: PCT/DE2014/100385
(87) Internationale Veröffentlichungsnummer: WO 2015/067239

(56) Entgegenhaltungen:
- DE-A1- 19 600 936
- DE-A1-102011 014 565
- MASSON P J ET AL: "HTS machines as enabling technology for all-electric airborne vehicles", SUPERCONDUCTOR SCIENCE AND TECHNOLOGY, IOP PUBLISHING, TECHNO HOUSE, BRISTOL, GB, Bd. 20, Nr. 8, 1. August 2007 (2007-08-01) , Seiten 748-756, XP020116140, ISSN: 0953-2048, DOI: 10.1088/0953-2048/20/8/005

## Beschreibung

Die Erfindung betrifft ein Luftfahrzeug mit einer Brennstoffzelleneinrichtung, die mit Wasserstoff aus einem Wasserstofftank sowie mit aus der Umgebungsluft entnommenem Sauerstoff betreibbar ist, ferner mit einer supraleitenden magnetischen Energiespeichereinheit (SMES-Einheit), die zusammen mit dem Wasserstofftank in einem Kryogenbehälter angeordnet ist.

Eine Energieerzeugungseinrichtung mit einer Brennstoffzelleneinrichtung, die mit Wasserstoff aus einem Wasserstofftank sowie mit aus der Umgebungsluft entnommenem Sauerstoff betreibbar ist, ferner mit einer supraleitenden magnetischen Energiespeichereinheit (SMES-Einheit), die zusammen mit dem Wasserstofftank in einem Kryogenbehälter angeordnet ist, ist aus der DE 10 2007 042 711 B4 bekannt. Dabei ermöglicht die Speicherung des für den Betrieb der Brennstoffzelleneinrichtung notwendigen flüssigen Wasserstoffs in einem gemeinsamen Tank mit der SMES-Einheit Synergieeffekte, denn es ist nur eine Kühlvorrichtung erforderlich. Diese Einrichtung umfasst einen Wasserstoffverflüssiger, welcher den flüssigen Wasserstoff produziert, welcher im Tank gelagert wird, und dabei gleichzeitig die SMES-Einheit kühlt. Es wird also Energie aufgewendet bzw. von der erzeugten Energie abgezweigt, um den flüssigen Wasserstoff bereitzustellen. Diese Anordung ist damit nur für einen stationären Anlagenbetrieb verwendbar.

Aus der DE 196 00 936 ist eine Energieerzeugungseinrichtung mit Flüssigwasserstoff und Supraleiter für ein Wasserflugzeug bekannt, die einen Flüssigwasserstofftank sowie eine separate SMES-Einheit umfasst, wobei die SMES-Einheit mittels des flüssigen Wasserstoffs aus dem Flüssigwasserstofftank gekühlt wird. Der durch Wärmezugang verdampfende Wasserstoff wird mittels eines Wärmetauschers erneut verflüssigt.

Die DE 10 2011 014 565 A1 zeigt ein Flugzeug mit einer Brennstoffzelleneinrichtung, die mit Wasserstoff aus einem in einem Kryogenbehälter angeordneten Wasserstofftank betreibbar ist. Der Sauerstoff wird aus der Umgebungsluft entnommen. Die Brennstoffzelleinrichtung dient dazu, das Luftfahrzeug zeitlich begrenzt mit elektrischer Energie zu versorgen. Dabei ist der Tank auf eine Größe von 50 bis 60 kg Wasserstoff ausgelegt.

Die DE 10 2011 013 577 A1 zeigt eine Anlage zur Speicherung von Wasserstoff und elektrischer Energie.

Hiervon ausgehend liegt der Erfindung die Aufgabe zugrunde, eine baulich einfache und kompakte aber zugleich die Sicherheitsanforderungen erfüllende Energieerzeugungseinrichtung bereitzustellen, die in einem Luftfahrzeug für einen Sprunglastfall elektrische Energie, vor allem bei Bodenaufenthalten, zur Verfügung stellt.

Erfindungsgemäß wird diese Aufgabe durch die im Anspruch 1 angegebenen Merkmale gelöst. Vorteilhafte Weiterbildungen ergeben sich aus den Unteransprüchen.

Die Speicherung von elektrischer Energie, um im Sprunglastfall eines dynamischen Brennstoffzellensystems die Ausgangsleistung unterbrechungsfrei erbringen zu können, erfolgt in der SMES-Einheit, die in der kryogenen Umgebung des Wasserstoffspeichers des Brennstoffzellensystems gekühlt wird. Die besonders hohe Energiedichte einer SMES-Einheit und die doppelte Nutzung der kryogenen Umgebung verringern das Gewicht des gesamten Systems. Die besonderen Randbedingungen der Luftfahrt erfordern ein möglichst geringes Gewicht, weshalb der Wasserstofftank nach jedem Flug neu betankt wird. Daher wird der Tank vergleichsweise klein dimensioniert auf maximal 40 kg Wasserstoff. Durch die vor jedem Flug stattfindende Betankung kann auf eine aktive Kühlung verzichtet werden, was den baulichen Aufwand und das Gewicht senkt. Für den Fall eines Lecks oder vollständig aufgebrauchten Wasserstoffs wird außerdem sichergestellt, dass sowohl der Supraleiter als auch das gesamte Luftfahrzeug keine Schäden nehmen. Das Luftfahrzeug bleibt auch bei ungekühltem Supraleiter wartungsfrei.

Die Erfindung wird nachfolgend anhand der beigefügten Zeichnung weiter erläutert.

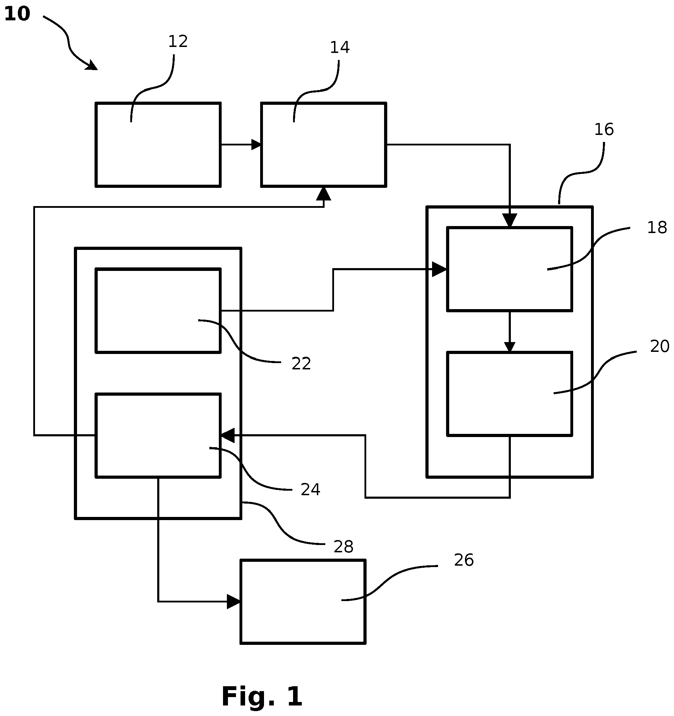

Fig. 1 zeigt eine schematische Darstellung einer Energieerzeugungseinrichtung 10 für ein nicht dargestelltes Luftfahrzeug. Diese umfasst einen Umgebungslufteinlass 12 zur Ansaugung und Reinigung von Umgebungsluft (beispielsweise Entfernung von Sand etc.) und Zuführung zu einem elektromechanischen Kompressor 14, der die komprimierte Luft einer Brennstoffzelleneinrichtung 16 zuführt, die eine Membraneinheit 18 und eine Energieerzeugungseinheit 20 umfasst.

Ein Wasserstofftank 22 zur Aufnahme flüssigen Wasserstoffs beaufschlagt die Membraneinheit 18, in der der Wasserstoff zusammen mit dem vom Kompressor 14 gelieferten Sauerstoff einer Reaktion unterworfen wird, in der unter Bildung von Wasser elektrische Energie in der Energieerzeugungseinheit 20 erzeugt wird. Die erzeugte elektrische Energie wird einer SMES-Einheit 24 zugeführt, von der wiederum ein Teil der Energie zum Betrieb des Kompressors 14 verwendet wird, während der überwiegende Teil der erzeugten Energie zum Betrieb von elektrischen Verbrauchern 26 zur Verfügung steht. Elektrische Verbraucher 26 sind alle elektrischen Einrichtungen in einem Luftfahrzeug, insbesondere die Computer-, Beleuchtungs- und Klimaanlagen.

Der Wasserstofftank 22 und die SMES-Einheit 24 sind in einem gemeinsamen Kryogenbehälter 28 untergebracht, so dass die nicht dargestellte Spule der SMES-Einheit 24 vom kryogenen Wasserstoff gekühlt wird. Der Kryogenbehälter 28 weist lediglich passive Wärmedämmmittel auf, jedoch keine aktiven Kühleinrichtungen. Auch sind keine Mittel zur Verflüssigung von Wasserstoff vorgesehen, welche den Energieverbrauch erhöhen würden.

Damit ist zwar die Einsatzzeit bzw. Bereitstellungszeit der erfindungsgemäßen Vorrichtung beschränkt, aber für die üblichen Flug- und Aufenthaltszeiten bei Zwischenstops lässt sich der Wasserstoffvorrat dimensionieren. So wird vorzugsweise nur ein Teil des Wasserstoffs im Normalbetrieb verbraucht werden, während ein anderer Teil, insbesondere ca. 50% weiterhin für Kühlzwecke zur Verfügung steht.

### Bezugszeichenliste

- 10: Energieerzeugungseinrichtung
- 12: Umgebungslufteinlass
- 14: Kompressor
- 16: Brennstoffzelleneinrichtung
- 18: Membran
- 20: Energieerzeugungseinheit
- 22: Wasserstofftank
- 24: SMES-Einheit
- 26: Verbraucher
- 28: Kryogenbehälter

## Patentansprüche

1. Luftfahrzeug mit einer Brennstoffzelleneinrichtung (16), die mit Wasserstoff aus einem Wasserstofftank (22) sowie mit aus der Umgebungsluft entnommenem Sauerstoff betreibbar ist, ferner mit einer supraleitenden magnetischen Energiespeichereinheit (SMES-Einheit) (24), die zusammen mit dem Wasserstofftank (22) in einem Kryogenbehälter (28) angeordnet ist, wobei der Kryogenbehälter (28) keine aktive Kühlung oder Flüssigwasserstofferzeugungseinrichtung umfasst, **dadurch gekennzeichnet dass** der Kryogenbehälter (28) ein Volumen zur Aufnahme von höchstens 40 kg flüssigen Wasserstoffs aufweist.

2. Luftfahrzeug nach einem der vorherigen Ansprüche, **dadurch gekennzeichnet, dass** der Kryogenbehälter (28) ein Volumen zur Aufnahme von höchstens 30 kg flüssigen Wasserstoffs aufweist.

3. Luftfahrzeug nach einem der vorherigen Ansprüche, **dadurch gekennzeichnet, dass** dieses eine elektromechanische Kompressoreinheit (14) zur Komprimierung von Umgebungsluft aufweist, die der Brennstoffzelleneinrichtung (16) zuführbar ist.

4. Luftfahrzeug nach einem der vorherigen Ansprüche, **dadurch gekennzeichnet, dass** der elektrische Ausgang der Brennstoffzelleneinrichtung (16) die SMES-Einheit (24) beaufschlagt.

5. Luftfahrzeug nach Anspruch 3, **dadurch gekennzeichnet, dass** die Kompressoreinheit (14) mit der SMES-Einheit (24) zur Energieversorgung elektrisch verbunden ist.

## Claims

1. Aircraft having a fuel cell device (16) that can be operated using hydrogen from a hydrogen tank (22) and also using oxygen that is drawn from the surrounding air, moreover said aircraft having a superconductive magnetic energy storage unit (SMES unit) (24) that is arranged together with the hydrogen tank (22) in a cryogenic container (28), wherein the cryogenic container (28) does not comprise an active cooling system or a liquid hydrogen-producing device, **characterised in that** the cryogenic container (28) comprises a volume for receiving a maximum of 40 kg of liquid hydrogen.

2. Aircraft according to the preceding claim, **characterised in that** the cryogenic container (28) comprises a volume for receiving a maximum of 30 kg of liquid hydrogen.

3. Aircraft according to any one of the preceding claims, **characterised in that** said aircraft comprises an electromechanical compressor unit (14) for compressing ambient air that can be supplied to the fuel cell device (16).

4. Aircraft according to any one of the preceding claims, **characterised in that** the electrical output of the fuel cell device (16) influences the SMES unit (24).

5. Aircraft according to claim 3, **characterised in that** the compressor unit (14) is electrically connected to the SMES unit (24) so as to supply energy.

## Revendications

1. Aéronef comportant un dispositif de pile à combustible (16), qui peut fonctionner avec de l'hydrogène provenant d'un réservoir d'hydrogène (22) ainsi qu'avec de l'oxygène prélevé dans l'air ambiant, comportant en outre une unité d'accumulateur d'énergie magnétique supraconductrice (unité SMES) (24), qui est disposée conjointement avec le réservoir d'hydrogène (22) dans un réservoir cryogénique (28), le réservoir cryogénique (28) ne comprenant pas de refroidissement actif ou de moyen de génération d'hydrogène liquide, **caractérisé en ce que** le réservoir cryogénique (28) présente un volume pour recevoir au maximum 40 kg d'hydrogène liquide.

2. Aéronef selon la revendication précédente, **caractérisé en ce que** le réservoir cryogénique (28) présente un volume pour recevoir au maximum 30 kg d'hydrogène liquide.

3. Aéronef selon une des revendications précédentes, **caractérisé en ce qu'**il présente une unité de compresseur électromécanique (14) pour comprimer de l'air ambiant qui peut être acheminé jusqu'au dispositif de pile à combustible (16).

4. Aéronef selon une des revendications précédentes, **caractérisé en ce que** la sortie électrique du dispositif de pile à combustible (16) sollicite l'unité SMES (24).

5. Aéronef selon la revendication 3, **caractérisé en ce que** l'unité de compresseur (14) est reliée électriquement à l'unité SMES (24) pour l'alimentation en énergie.
